# EUROPÄISCHE PATENTANMELDUNG

(11) **EP 2 036 751 A2**
(43) Veröffentlichungstag der Anmeldung: **18.03.2009**
(21) Anmeldenummer: 08014817.4
(22) Anmeldetag: 21.08.2008
(51) Int. Cl.: B60J 5/04

(54) **Türantrieb für eine Schwenkschiebetür eines Fahrzeugs**

(30) Priorität: 15.09.2007 DE 102007044185
(71) Anmelder: Daimler AG, 70327 Stuttgart (DE)
(72) Erfinder: Lameli, Volker, 68623 Lampertheim (DE); Schröder, Jan, 67346 Speyer (DE); Seba, Christoph, 68165 Mannheim (DE); Stephany, Fredi, 68519 Viernheim (DE)

(57) **Zusammenfassung**

Die Erfindung betrifft einen Türantrieb für eine Schwenkschiebetür eines Fahrzeugs, insbesondere eines Omnibusses, mit einem Antriebsmechanismus (10), mittels welchem ein Türflügel der Schwenkschiebetür zwischen einer Schließstellung und einer Offenstellung zu verlagern ist, und mit einer Sicherungseinrichtung (18), mittels welcher der Türflügel in seiner Schließstellung gesichert gehalten ist, wobei die Sicherungseinrichtung (18) eine Hebelanordnung (20) umfasst, welche zur Sicherung des Türflügels in seiner Schließstellung in eine Übertotpunktverriegelung zu bringen ist.

## Beschreibung

Die Erfindung betrifft einen Türantrieb für eine Schwenkschiebetür eines Fahrzeugs, insbesondere eines Omnibusses, der im Oberbegriff des Patentanspruchs 1 angegebenen Art.

Aus dem Stand der Technik sind eine Vielzahl von derartigen Türantrieben als bekannt zu entnehmen, welche üblicherweise einen Antriebsmechanismus umfassen, mittels welchem zumindest ein, vorzugsweise jedoch zwei Türflügel der Schwenkschiebetür zwischen einer Schließstellung und einer Offenstellung zu verlagern ist bzw. sind. Damit der wenigstens eine Türflügel der Schwenkschiebetür in seiner Schließstellung gesichert gehalten ist, sind aus dem Stand der Technik bereits eine Mehrzahl von Sicherungseinrichtungen als bekannt zu entnehmen.

So offenbart die DE 29 30 250 C2 bereits eine derartige Sicherungseinrichtung zum Verriegeln eines Schwenktürflügels, welche dort eine Hubverriegelung umfasst. Mit anderen Worten werden dort am Türrahmen der Schwenkschiebetür angebrachte Nasen eingesetzt, welche die am Türflügel angebrachten Nasen übergreifen. Hierdurch wird die sichere Positionierung des Türflügels in der Schließstellung erreicht. Zum Öffnen muss der Türflügel entsprechend angehoben werden, damit die jeweiligen Nasen außer Eingriff kommen. Durch die Hubbewegung kommt es jedoch zu einer Verzögerung beim Öffnen bzw. Schließen der Tür.

Aus der DE 100 14 346 C1 ist darüber hinaus eine Sicherungseinrichtung als bekannt zu entnehmen, welche auf der Basis von Druckluft betätigt wird. Mit anderen Worten wird durch diese Druckluftsicherung der jeweilige Türflügel mechanisch in seiner Schließstellung gesichert.

Eine weitere mechanische Sicherung über ein Schwenkgetriebe mit gesteuerten Schubstangen ist zudem der DE 197 35 181 C2 zu entnehmen. Eine mechanische Zuhaltung über ein Schwenkgetriebe gesteuerte Schubstangen ist nur für den Einzelfall geeignet, bei dem eine vertikal angeordnete Motor / Getriebeeinheit vorhanden ist, die erweitert werden kann. Weiterhin ist diese Lösung kostenintensiv.

Schließlich ist aus der DE 199 46 501 C2 eine mechanische Endlagensicherung des Antriebs einer derartigen Schwenkschiebetür als bekannt zu entnehmen. Eine mechanische Endlagensicherung des Antriebes hat den Nachteil, dass die Kraft, die auf das Türblatt wirkt, mit einem großen Hebel aufgenommen werden muss.

Aufgabe der vorliegenden Erfindung ist es, einen Türantrieb für eine Schwenkschiebetür der eingangs genannten Art zu schaffen, mittels welchem der jeweilige Türflügel der Schwenkschiebetür auf einfache und zuverlässige Weise in seiner Schließstellung zu halten ist.

Diese Aufgabe wird erfindungsgemäß durch einen Türantrieb mit den Merkmalen des Patentanspruchs 1 gelöst. Vorteilhafte Ausgestaltungen mit zweckmäßigen und nichttrivialen Weiterbildungen der Erfindung sind in den abhängigen Patentansprüchen angegeben.

Um einen Türantrieb zu schaffen, mittels welchem der jeweilige Türflügel der Schwenkschiebetür auf besonders einfache und zuverlässige Weise in seiner Schließstellung gesichert gehalten werden kann, ist erfindungsgemäß vorgesehen, dass die Sicherungseinrichtung eine Hebelanordnung umfasst, welche zur Sicherung des Türflügels in seiner Schließstellung in eine Übertotpunktverriegelung zu bringen ist. Mit anderen Worten ist vorliegend eine Hebelanordnung vorgesehen, welche eine Mehrzahl von derartig zueinander angeordnete Hebel umfasst, dass sich die erfindungsgemäße Übertotpunktverriegelung ergibt.

Somit ist vorliegend eine rein mechanische und unabhängig von elektrischen, pneumatischen oder hydraulischen Energieversorgungen betreibbare Sicherung bzw. Verriegelung des Türflügels in der Schließstellung möglich. Durch die besondere Gestaltung der Hebelanordnung kann zudem auf zusätzliche Elemente im Türantrieb verzichtet und Gewicht und Kosten gespart werden. Ein weiterer Vorteil der vorliegenden Hebelanordnung ist es, dass deren Verriegelung im Wesentlichen ohne Verzögerung der Öffnungs- und Schließzeiten des Türflügels erfolgen kann.

Ein weiterer Vorteil der vorliegenden Übertotpunktverriegelung ist es, dass Schwingungen und geringe Relativbewegungen des Türantriebs durch die Hebelverhältnisse auf einfache Weise kompensiert werden können. Mit anderen Worten ist somit sichergestellt, dass der Antrieb durch Vibrationen und geringe Bewegungen wie beispielsweise Erschütterungen im Fahrbetrieb des Fahrzeugs die Tür nicht minimal öffnen.

In weiterer Ausgestaltung der Erfindung hat es sich darüber hinaus als vorteilhaft gezeigt, wenn die Hebelanordnung zwei in einem Gelenkpunkt miteinander verbundene Kniehebel umfasst, von welchen der eine Kniehebel mit einem Ausstellhebel des jeweiligen Türflügels und der andere Kniehebel an der Fahrzeugseite insbesondere an einem Antriebsträger gelagert ist. Durch die beiden Kniehebel kann somit auf einfache Weise die Übertotpunktverriegelung der Hebelanordnung in der Schließstellung des Türflügels erreicht werden.

Die beiden im Gelenkpunkt miteinander verbundenen Kniehebel werden dabei besonders bevorzugt über einen Antriebhebel angetrieben, welcher im Gelenkpunkt der beiden Kniehebel angreift. Somit kann insgesamt eine besonders zuverlässige und einfache Verriegelung bzw. Entriegelung mittels des Antriebshebels geschaffen werden.

In weiterer Ausgestaltung der Erfindung ist der Antriebshebel mit einem diesen antreibenden Führungselement gelenkig verbunden. Dieses Führungselement umfasst in weiterer Ausgestaltung der Erfindung eine bogenförmige Führungskulisse, so dass dieses entsprechend der Führungskulisse eine bestimmte Bewegungsform ausführt, welche über das Gelenk bzw. die Lagerstelle auf den Antriebhebel übertragen wird. Insbesondere ist es somit möglich, eine Linearbewegung eines Befestigungselements des Führungselements in eine entsprechende Bewegungsbahn am Gelenkpunkt zwischen dem Antriebhebel und dem Führungselement umzuwandeln.

Eine hierzu alternative Möglichkeit zur Umwandlung einer Linearbewegung des Befestigungselements des Führungselements in eine entsprechende Bewegungsbahn am Gelenkpunkt zwischen dem Antriebhebel und dem Führungselement sieht vor, dass das Führungselement als Lenkerelement ausgebildet ist und ein Führungsteil umfasst, welches entlang geraden Führungskulisse zu verschieben ist. Somit wir die gewünschte Bewegungsbahn am Gelenkpunkt zwischen dem Antriebhebel und dem Führungselement im vorliegenden Fall durch die überlagerte Rotations- und Schiebebewegung des Lenkerelements erreicht, welche besonders betriebssicher ist.

Als zudem vorteilhaft hat es sich gezeigt, wenn eine anfängliche Öffnungsbewegung des Befestigungselements des Führungselementes erforderlich ist, bis ein Totpunkt der miteinander am Gelenkpunkt verbundenen Kniehebel erreicht wird. Dies hat insbesondere den Vorteil, dass Tolleranzen innerhalb der Hebelanordnung elemeniert werden können, ohne dass dies zu einer Überdrückung des Totpunktes führen würde. Ein weiterer Vorteil ist es, dass fahrbetriebsbedingte Vibrationen im Antrieb - insbesondere im Antriebshebel - nicht zu einer entsprechenden Betätigung der Kniehebel bzw. zu einem Überdrücken des Totpunktes führt. Damit wird insgesamt erreicht, dass kleinere anfängliche Öffnungsbewegungen des Führungselements die Übertotpunktstellung nicht lösen, da der Weg des Gelenkpunktes zwischen den beiden Kniehebeln hierfür nicht ausreicht.

Als zudem vorteilhaft hat es sich gezeigt, wenn der Ausstellhebel des Türflügels drehfest mit einer Drehsäule des Antriebsmechanismus verbunden und in der Schließstellung des Türflügels gesichert gehalten ist. Somit wird mittels der Hebelanordnung eine Festlegung der die jeweiligen Ausstellhebel miteinander verbindenden Drehsäule auf einfache Weise möglich.

Schließlich zeichnet sich die erfindungsgemäße Hebelanordnung in weiterer Ausgestaltung der Erfindung dadurch aus, dass nicht nur die Sicherung des Türantriebs bzw. des Türflügels mittels der entsprechenden Übertotpunktverriegelung erreicht wird, sondern dass der Ausstellhebel des Türflügels über die beiden Hebel der Hebelanordnung angetrieben ist. Somit hat die Hebelanordnung neben ihrer Verriegelungsfunktion zusätzlich die Antriebsfunktion für den jeweils zugeordneten Ausstellhebel.

Weitere Vorteile, Merkmale und Einzelheiten der Erfindung ergeben sich aus der nachfolgenden Beschreibung von zwei bevorzugten Ausführungsbeispielen sowie anhand der Zeichnungen; diese zeigen in:

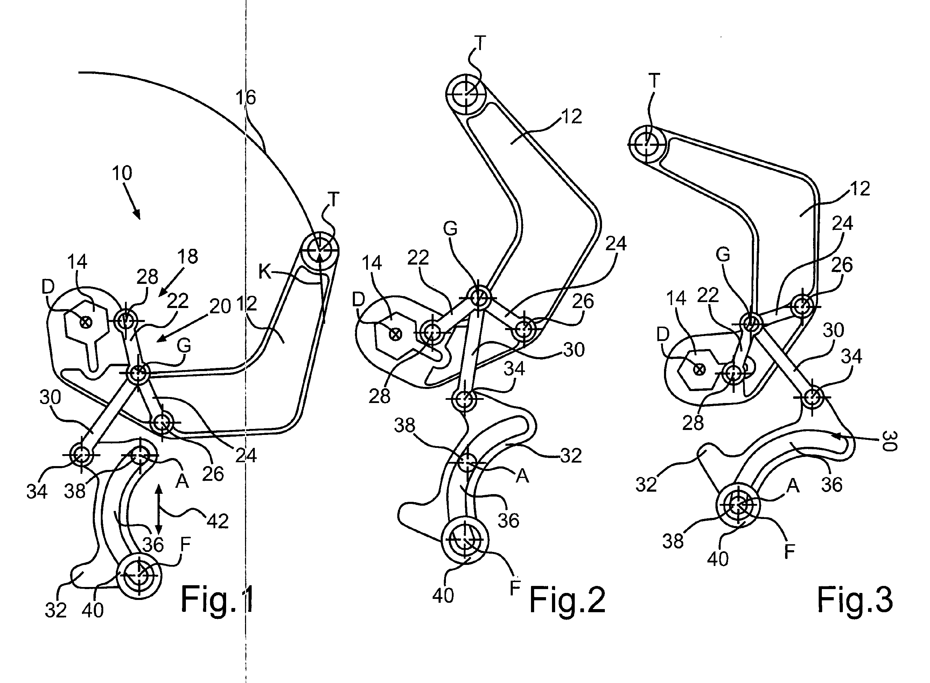

- Fig.1: eine Draufsicht auf einen Türantrieb einer Schwenkschiebetür eines vorliegend als Omnibus ausgebildeten Fahrzeuges mit einem Ausstellhebel eines Antriebmechanismus, über welchen ein Türflügel der Schwenkschiebetür zwischen einer Schließstellung und einer Offenstellung zu verlagern ist, und mit einer eine Hebelanordnung umfassenden Sicherungseinrichtung, welche zwei gelenkig miteinander verbundene Kniehebel umfasst, die mittels eines mit einem Führungselement zusammenwirkenden Antriebshebels in eine Übertotpunktverriegelung gebracht sind, in welcher der Türflügel gesichert in seiner Schließstellung gehalten ist;
- Fig.2: eine Draufsicht auf den Türantrieb gemäß Fig. 1, wobei die Übertotpunktverriegelung der beiden Kniehebel mittels des durch das Führungselement betätigten Antriebhebels überdrückt worden ist, und wobei mittels der beiden Kniehebel der Ausstellhebel des Türflügels in eine Mittelstellung verlagert worden ist;
- Fig.3: eine Draufsicht auf den Türantrieb gemäß den Fig. 1 und 2, wobei der Ausstellhebel mittels der die beiden Kniehebel, den Antriebhebel sowie das Führungselement umfassenden Hebelanordnung in seine Offenstellung überführt worden ist;

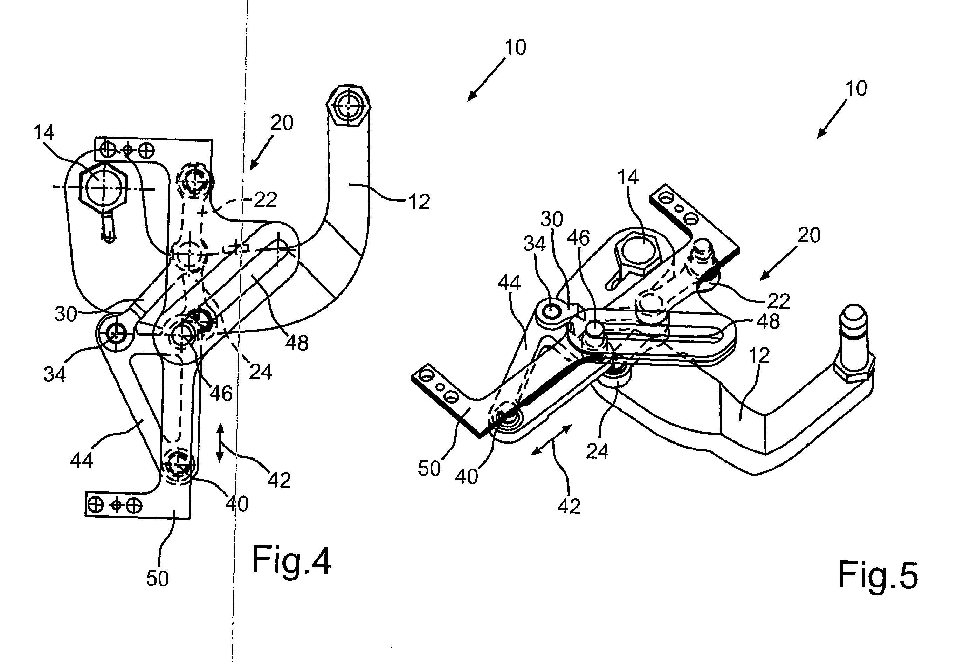

- Fig.4: eine Draufsicht auf den Türantrieb der Schwenkschiebetür gemäß einer alternativen Ausführungsform, wobei wiederum die Hebelanordnung der Sicherungseinrichtung vorgesehen ist, welche zwei gelenkig miteinander verbundene Kniehebel umfasst, die mittels eines mit einem Führungselement zusammenwirkenden Antriebshebels in eine Übertotpunktverriegelung gebracht sind, in welcher der Türflügel gesichert in seiner Schließstellung gehalten ist, wobei zur Umwandlung einer Linearbewegung eines Befestigungselements eines Lenkerelements in eine entsprechende Bewegungsbahn am Gelenkpunkt zwischen dem Antriebhebel und dem Führungselement ein Führungsteil vorgesehen ist, welches entlang geraden Führungskulisse zu verschieben ist; und in
- Fig.5: eine Perspektivansicht auf den Türantrieb der Schwenkschiebetür gemäß der in Fig. 4 gezeigten alternativen Ausführungsform.

In den Fig. 1 bis 3 ist jeweils in einer schematischen Draufsicht ein Türantrieb für eine Schwenkschiebetür eines Omnibusses auszugsweise erkennbar. Als im Rahmen der Erfindung mitumfasst ist es dabei zu betrachten, dass der vorliegende Türantrieb nicht nur bei Schwenkschiebetüren von Omnibussen, sondern auch bei anderen Fahrzeugen, beispielsweise auch Schienenfahrzeugen, zum Einsatz kommen kann.

Der Türantrieb umfasst einen Antriebsmechanismus 10, welcher als wesentliches Bauteil einen hier oberen Ausstellhebel 12 umfasst. An seinem einen Ende ist der Ausstellhebel 12 formschlüssig mit einer Drehsäule 14 verbunden. Darüber hinaus ist der Ausstellhebel 12 während seiner Verlagerung zwischen einer Schließstellung und einer Offenstellung eines nicht gezeigten Türflügels der Schwenkschiebetür um eine Drehachse D der Drehsäule 14 schwenkbar. An seinem der Drehachse D abgewandten Ende ist der Ausstellhebel 12 auf nicht näher dargestellte Weise im Bereich einer Türflügelachse T am korrespondierenden Türflügel der Schwenkschiebetür angelenkt bzw. gelagert. Somit wird durch den Ausstellhebel 12 ein Ausstellen bzw. ein Verlagern des jeweils zugeordneten Türflügels zwischen einer in Fig. 1 gezeigten Schließstellung und einer in Fig. 3 gezeigten Offenstellung erreicht. Die Türflügelachse T wird hierbei - wie durch die Schwenklinie 16 angedeutet - um etwa 90° verschwenkt.

Dem Antriebsmechanismus ist des Weiteren eine Sicherungseinrichtung 18 zugeordnet welche im Wesentlichen eine Hebelanordnung 20 umfasst.

Die Hebelanordnung 20 weist zwei Kniehebel 22, 24 auf, welche in einem Gelenkpunkt G gelenkig miteinander verbunden sind. Der Kniehebel 24 ist dabei an seinem dem Gelenkpunkt G abgewandten Ende an dem Ausstellhebel 12 im Bereich einer Lagerstelle 26 gelagert. Der andere Kniehebel 22 ist kraftfahrzeugseitig an einem nicht gezeigten Antriebsträger im Bereich einer Lagerstelle 28 gelagert.

Ebenfalls umfasst die Hebelanordnung 20 einen Antriebshebel 30, welcher mit seinem einen Ende am Gelenkpunkt G der beiden Kniehebel 22. 24 angelenkt ist. An seinem dem Gelenkpunkt G abgewandten Ende ist der Antriebshebel 30 mit einem Führungselement 32 im Bereich des Gelenks 34 verbunden.

Das Führungselement 32 umfasst im Wesentlichen eine bogenförmige Führungskulisse 36, welche mit einem ortsfesten Führungszapfen 38 korrespondiert. Des Weiteren umfasst das Führungselement 32 ein ringförmiges Befestigungselement 40, über welches das Führungselement 32 - um eine Achse F gelagert - mit einem nicht gezeigten Stellelement verbunden ist. Dieses Stellelement ist vorliegend ein Stellzylinder, welcher hydraulisch oder pneumatisch betrieben ist. Natürlich wären auch andere Aktuatoren denkbar.

In Zusammenschau der Fig. 1 bis 3 ist nun erkennbar, dass zum Öffnen des Türflügels der Schwenkschiebetür das Befestigungselement 40 des Führungselements 32 in einer mit dem Pfeil 42 angedeuteten Linearbewegung in Richtung des Ausstellhebels 12 bzw. der Drehsäule 14 zu verschieben ist. Die Linearbewegung (Pfeil 42) verläuft dabei parallel einer gedachten Linie zwischen er Achse F des Befestigungselements 40 bzw. einer Achse A des Führungszapfens 38. Mit anderen Worten wird somit die Achse F in Richtung der Achse A bewegt, bis diese schließlich - wie in Fig. 3 dargestellt - koaxial übereinander liegen.

Einhergehend mit diesem aufeinander zu Bewegen der beiden Achsen F, A wird eine Drehung des Führungselements 32 erreicht, welche durch die mit dem Führungszapfen, 38 zusammenwirkende Führungskulisse 36 bestimmt ist. Einhergehend mit dieser Linearbewegung der Achse F (Pfeil 42) ergibt sich eine bogenförmige Bewegungskurve des Gelenkes 34, welche das Führungselement 32 mit dem Antriebshebel 30 verbindet. Diese kurvenförmige Bewegung des Gelenkes 34 des Antriebhebels 30 veranlasst die beiden Kniehebel 22, 24 wiederum zu der in den Fig. 1 bis 3 gezeigten Bewegungsabfolge.

In Fig. 1 ist nun eine Schließstellung des Ausstellhebels 12 bzw. des nicht gezeigten Türflügels der Schwenkschiebetür dargestellt. Zur Sicherung dieser Schließstellung des Türflügels bzw. des fest mit der Drehsäule 14 verbundenen Ausstellhebels 12 sind die beiden Kniehebel 22, 24 in einer Übertotpunktverriegelung zueinander angeordnet. Demzufolge ist insbesondere aus Fig. 1 erkennbar, dass der Gelenkpunkt G zwischen den beiden Kniehebeln 22, 24 weiter links liegt als eine gedachte Linie zwischen den beiden Lagerstellen 26, 28, an welchen die beiden Kniehebeln 22, 24 mit ihren jeweils von dem Gelenkpunkt G angewandten Enden gelagert sind. Während also der Schnittpunkt zwischen der gedachten Linie zwischen den beiden Lagerstellen 26, 28 und dem Gelenkpunkt G genau den Totpunkt darstellt, ist der Gelenkpunkt G in Fig. 1 weiter links angeordnet. Hierdurch ist die besagte Übertotpunktverriegelung zwischen den beiden Kniehebeln 22, 24 gegeben.

Wird nun das Befestigungselement 40 bzw. deren Achse F in Richtung des Führungszapfens 38 bewegt und hierdurch das Führungselement 32 - und somit schlussendlich auch der Antriebshebel 30 - angetrieben, so wird der Gelenkpunkt G aus seiner Übertotpunktverriegelung über seinen Totpunkt, in welchem der Gelenkpunkt G die gedachte Linie zwischen den beiden Lagerstellen 26, 28 schneidet, bewegt.

Im Weiteren fungieren die beiden Kniehebel 22, 24 als Antriebshebel, mittels welchen der Ausstellhebel 12 in eine in Fig. 2 gezeigte Mittelstellung um die Drehachse D der Drehsäule 14 gedreht wird. Es ist erkennbar, dass in dieser Stellung die beiden Kniehebel 22, 24 in einem entsprechend stumpfen Winkel zueinander liegen. Ebenfalls ist erkennbar, dass die Lagerstelle 28 fahrzeugfest verbleibt, während über die Lagerstelle 26 der Ausstellhebel 12 entsprechend gedreht wird.

Fig. 3 zeigt schließlich eine Endstellung bzw. Offenstellung des Ausstellhebels 12, in welcher der damit angetriebene Türflügel seine vollständige Offenstellung erreicht hat. Dabei ist erkennbar, dass das Befestigungselement 40 bzw. dessen Achse F in Überdeckung mit der Achse A der Führungszapfens 38 gekommen ist. Der Ausstellhebel 12 hat somit einen Schwenkweg zwischen der Schließstellung und der Offenstellung von etwa 90° hinter sich.

Um auf die Schließstellung des Antriebsmechanismus 10 in Fig. 1 zurückzukommen, ist dort erkennbar, dass durch die Übertotpunktverriegelung eine sichere Festlegung des Türflügels bzw. des Ausstellhebels 12 erreicht wird. Wird beispielsweise durch Fahrgäste der Türflügel nach außen hin mit einer schematisch angedeuteten Kraft K (Fig. 1) beaufschlagt, so ergibt sich hierdurch ein Drehmoment im Bereich der Lagerstelle 26 mit dem Drehmomenthebel zwischen der Lagerstelle 26 und der Drehachse D der Drehsäule 14. Da die beiden Kniehebel 22, 24 in der Übertotpunktverriegelung angeordnet sind, wird jedoch der stumpfe Winkel zwischen den beiden Kniehebeln 22, 24 kleiner, da bedingt durch die Bewegung der Lagerstelle 26 der Gelenkpunkt G noch weiter nach links bewegt wird. Dies bedingt wiederum, dass der Ausstellhebel 12 entgegen der Kraft K weiter nach innen gezogen wird. Mit anderen Worten ist es ein besonderes Merkmal des vorliegenden Antriebmechanismus 10, dass eine Kraftbeaufschlagung (Kraft K) vom Innenraum her nach außen auf den Türflügel zu einem noch sichereren Schließen der Schwenkschiebetür führt.

Ein weiteres Merkmal der vorliegenden Sicherungseinrichtung 18 ist es, dass die anfängliche Öffnungsbewegung des Befestigungselements 40 (Achse F) des Führungselements 32 nicht sofort zu einer Verschwenkung des Ausstellhebels 12 führt, sondern dass vielmehr eine anfängliche Öffnungsbewegung der Achse F erforderlich ist, bis über das Gelenk 34 und den Antriebshebel 30 zunächst der Totpunkt der miteinander am Gelenkpunkt G verbundenen Kniehebel 22, 24 erreicht wird. Hierdurch werden insbesondere fertigungsbedingte Toleranzen im Türantrieb ausgeglichen.

Insgesamt ist somit aus Fig. 1 erkennbar, dass die Drehsäule 14 in der geschlossenen Endlage bzw. der Schließstellung durch eine Totpunkt-Position verriegelt ist. Eine Bewegung der Türflügelachse T kann somit nur dann erfolgen, wenn sich die Achse F bewegt. Die Bewegung der Achse F ist dabei durch das nicht gezeigt Stellelement genau vorgegeben. Erst nach einer anfänglichen Öffnungsbewegung wird somit über den Antriebshebel 30 die Übertotpunktverriegelung im Gelenkpunkt G aufgehoben und der Ausstellhebel 12 bzw. der Türflügel beginnen sich zu öffnen.

Ein weiteres Merkmal des Antriebsmechanismus 10 ist es, dass Vibrationen und geringe Bewegungen bedingt durch die Übertotpunktverriegelung nicht zu einer Bewegung des Ausstellhebels 12 bzw. Türflügels führen. Vielmehr muss hierzu zunächst die Totpunktstellung - also der Schnittpunkt des Gelenkpunktes G bei den Kniehebeln 22, 24 mit dessen jeweiligen Lagerstellen 26, 28 - überschritten werden. Der Weg, den die Achse F hierfür zurücklegen muss, ist dabei größer als der Weg, den der Gelenkpunkt G zurücklegt. Dies wird insbesondere durch die Ausgestaltung der Führungskulisse 36 erreicht. So können kleine Bewegungen im Bereich der Achse F die Übertotpunktverreigelung nicht lösen, da der Weg des Gelenkpunktes G zwischen den beiden Kniehebeln hierfür nicht ausreichend ist.

In den Fig. 4 und 5 ist in einer Draufsicht bzw. einer Perspektivansicht der Antriebsmechanismus 10 des Türantriebs der Schwenkschiebetür in einer alternativen Ausführungsform gezeigt.

Die Hebelanordnung 20 mit den Kniehebeln 22, 24 sowie der Antriebshebel 30 sind dabei identisch zur Ausführungsform gemäß den Fig. 1 bis 3 ausgebildet. Zur Vermeidung von Wiederholungen wird daher - insbesondere auch im Zusammenhang mit der Übertotpunktverriegelung - auf die obige Beschreibung und Funktionsweise der Hebelanordnung 20 bzw. des Antriebshebels 30 verwiesen.

Die alternative Ausführungsform unterscheidet sich von derjenigen gemäß den Fig. 1 bis 3 dadurch, dass zur Umwandlung der mit dem Pfeil 42 angedeuteten Linearbewegung des Befestigungselements 40 in eine entsprechende Bewegungsbahn am Gelenkpunkt 34 des Antriebshebels 30 ein im Wesentlichen dreieckförmiges Lenkerelement 44 als Führungselement dient. Am Lenkerelement 14 ist ein als Führungsbolzen ausgebildetes Führungsteil 46 festgelegt, welches entlang einer geraden Führungskulisse 48 zu verschieben ist. Die gerade Führungskulisse 48 ist dabei aus einem portalseitig festen Teil 50 ausgespart.

Eine Linearverschiebung des Befestigungselements 40 mittels eines daran angreifenden Aktuators oder sonstigen Stellelements entlang des Pfeils 42 führt durch die Schiebeführung des lenkerfesten Führungsteils 46 somit zu einer bogenförmigen Bewegung des Gelenks 34 des Antriebshebels 30, welcher derjenigen gemäß der Ausführungsform in den Fig. 1 bis 3 entspricht.

## Patentansprüche

1. Türantrieb für eine Schwenkschiebetür eines Fahrzeugs, insbesondere eines Omnibusses, mit einem Antriebsmechanismus (10), mittels welchem ein Türflügel der Schwenkschiebetür zwischen einer Schließstellung und einer Offenstellung zu verlagern ist, und mit einer Sicherungseinrichtung (18), mittels welcher der Türflügel in seiner Schließstellung gesichert gehalten ist,
**dadurch gekennzeichnet, dass**
die Sicherungseinrichtung (18) eine Hebelanordnung (20) umfasst, welche zur Sicherung des Türflügels in seiner Schließstellung in eine Übertotpunktverriegelung zu bringen ist.

2. Türantrieb nach Anspruch 1,
**dadurch gekennzeichnet, dass**
die Hebelanordnung (20) zwei in einem Gelenkpunkt (G) miteinander verbundene Kniehebel (22, 24) umfasst, von welchen der eine Kniehebel (24) mit einem Ausstellhebel (12) des Türflügels und der andere Kniehebel (22) kraftfahrzeugseitig, insbesondere an einem Antriebsträger, gelagert ist.

3. Türantrieb nach Anspruch 2,
**dadurch gekennzeichnet, dass**
die Hebelanordnung (20) einen Antriebshebel (30) umfasst, welcher im Gelenkpunkt (G) der beiden Kniehebel (22, 24) gelagert ist.

4. Türantrieb nach Anspruch 3,
**dadurch gekennzeichnet, dass**
der Antriebshebel (30) mit einem diesen antreibenden Führungselement (32) gelenkig verbunden ist.

5. Türantrieb nach Anspruch 4,
**dadurch gekennzeichnet, dass**
das Führungselement (32) eine bogenförmige Führungskulisse (36)umfasst.

6. Türantrieb nach Anspruch 4,
**dadurch gekennzeichnet, dass**
das Führungselement als Lenkerelemente (44) ausgebildet ist und ein Führungsteil (46) umfasst, welches entlang einer geraden Führungskulisse (48) zu verschieben ist.

7. Türantrieb nach einem der Ansprüche 4 bis 6,
**dadurch gekennzeichnet, dass**
ein Befestigungselement (40) des Führungselements (32) in einer Linearbewegung mittels eines Stellelements anzutreiben ist.

8. Türantrieb nach einem der Ansprüche 2 bis 7,
**dadurch gekennzeichnet, dass**
eine anfängliche Öffnungsbewegung des Befestigungselements (40) des Führungselements (32) erforderlich ist, bis ein Totpunkt der miteinander am Gelenkpunkt (G) verbundenen Kniehebel (22, 24) zu erreichen ist.

9. Türantrieb nach Anspruch 2 bis 8,
**dadurch gekennzeichnet, dass**
der Ausstellhebel (12) des Türflügels drehfest mit einer Drehsäule (14) des Antriebsmechanismus (10) verbunden und in der Schließstellung des Türflügels gesichert gehalten ist.

10. Türantrieb nach einem der Ansprüche 2 bis 9,
**dadurch gekennzeichnet, dass**
der Ausstellhebel (12) des Türflügels über die beiden Kniehebel (22, 24) der Hebelanordnung (20) angetrieben ist.
